# EUROPÄISCHE PATENTSCHRIFT

(11) **EP 0 340 626 B1**
(45) Veröffentlichungstag und Bekanntmachung des Hinweises auf die Patenterteilung: **04.08.1993**
(21) Anmeldenummer: 89107609.3
(22) Anmeldetag: 27.04.1989
(51) Int. Cl.: A21B 3/07, A21B 1/50

(54) **Backschragen**
Baker's trolley
Chariot de boulangerie

(30) Priorität: 05.05.1988 DE 3815243; 23.09.1988 DE 8812032 U
(43) Veröffentlichungstag der Anmeldung: 08.11.1989
(73) Patentinhaber: KARL AHLBORN MASCHINENFABRIK KG, D-37247 Grossalmerode (DE)
(72) Erfinder: Ahlborn, Fritz, D-3432 Grossalmerode (DE)
(74) Vertreter: Walther, Horst, Dipl.-Ing.

(56) Entgegenhaltungen:
- BE-A- 532 632
- BE-A- 532 633
- DE-A- 2 833 226
- DE-U- 8 706 575
- DE-U- 8 809 346
- FR-A- 1 458 682
- FR-A- 2 410 437
- FR-A- 2 417 944

## Beschreibung

Die Erfindung betrifft einen Backschragen mit Backblechen, welcher mit einer Beschickungsvorrichtung zusammenarbeitet, die die Kipptrögelapparate zum Abkippen der Backware auf die Backbleche aufnimmt, wobei im Backschragen mehrere übereinander angeordnete Auflagen für die Backbleche vorgesehen sind.

Das Abbacken von Brötchen geschieht bekanntlich in Backschragen, wobei die Brötchen auf Backblechen liegen.

Bevor jedoch das Abbacken der Brötchen vorgenommen werden kann, müssen die Brötchen einem Garprozeß unterworfen werden, wobei sie jedoch mit ihrem Längseinschnitt auf dem Kopf liegen. Zum Zwecke des Abbackens müssen deshalb die Brötchen vorher umgedreht werden. Deshalb liegen die Brötchen zunächst auf einem sogenannten Kippkasten, auf den das Backblech dann aufgelegt wird, wobei das Backblech zusammen mit dem Kippkasten umgedreht wird, so daß nunmehr die Brötchen mit der richtigen Seite auf dem Backblech liegen und dann in den Backschragen geschoben werden können.

Diese Vorbereitungsarbeiten vor dem eigentlichen Abbacken der Brötchen sind umständlich und kostenaufwendig.

Um ein rationelleres Arbeiten zu ermöglichen, ist die Beschickungsvorrichtung mit Auflagestützen versehen worden, die in ihrem vertikalen Abstand dem vertikalen Abstand der Auflagen des Backschragens entsprechen, wie es ja in der DE-U 8706 575 beschrieben ist.

Dabei weist die Beschickungsvorrichtung je einen auf den Auflagestützen lagernden Kipptrögelapparat auf, welcher unterhalb der Kipptrögel ein herausziehbares Backblech besitzt, welches auf den Auflagestützen lagert.

Im einzelnen ist die Ausbildung dabei so getroffen, daß das Backblech zwischen den Längsholmen des Kipptrögelapparates geführt ist.

Dadurch ist es nunmehr möglich, die auf den einzelnen Kipptrögeln lagernden Brötchen durch Verschwenken der Kipptrögel auf das Backblech zu befördern, wobei nunmehr die Brötchen die für das Backen richtige Lage einnehmen. Da das Backblech auf Auflagestützen lagert, die in gleicher Höhe angeordnet sind wie die Auflagen des Backschragens, kann nunmehr in einfacher Weise das Verschieben des beladenen Backbleches auf die Auflagen des Backschragens erfolgen. Der vollständig mit Backblechen beschickte Backschragen wird dann in den Ofen geschoben.

Der Erfindung liegt nun die Aufgabe zugrunde,den Backschragen weiter zu verbessern, insbesondere im Hinblick auf die Betätigung der Backbleche.
Daher ist erfindungsgemäß eine Betätigungsvorrichtung zum gemeinsamen Verstellen der im Backschragen lagernden Backbleche zur Beschickungsvorrichtung hin bzw. zurück vorgesehen. Dabei besteht die Betätigungsvorrichtung aus einem Rahmen mit einem, vorzugsweise zwei Griffen, wobei der Rahmen Mittel, z.B. Haken, zum Erfassen der einzelnen Backbleche aufweist. Die einzelnen Backbleche werden von den am Rahmen untereinander paarweise angeordneten Haken erfaßt und in ihrer Gesamtheit von dem Backschragen in die Beschickungsvorrichtung geschoben, bzw. aus der Beschickungsvorrichtung in den Backschragen gezogen. Es ist unmittelbar einsichtig, daß mit Hilfe dieser Vorrichtung der Arbeitsaufwand zum Bewegen der Bleche erheblich vermindert wird.

Dabei ist aus der belgischen Patentschrift 532632 an sich bekannt, ein Fahrgestell mit horizontalen Armen zum Einführen und Herausführen von Backblechen zu verwenden, wobei die Arme in vertikaler Richtung bewegbar sind, um die im Ofen lagernden Backbleche zu erfassen, und um sie aus dem Ofen mit den gebackenen Brötchen herauszuziehen.

Eine besonders vorteilhafte Ausführungsform einer solchen Betätigungsvorrichtung besteht aus einem an den Backschragen ansetzbaren Gestell, das einen die Backbleche erfassenden mittels einer Schubvorrichtung verschiebbaren Träger aufweist. Im einzelnen weist das Gestell zum Ansetzen an den Backschragen seitlich mit Keilführung versehene Ansatzhaken auf; der längsverschiebbare Träger selbst weist Haken auf, die jeweils den Rand eines Backbleches erfassen. Die Schubvorrichtung ist als Zahnstangen- oder Triebstangenantrieb ausgebildet, dessen Zahnritzel ortsfest gelagert und mittels einer Kurbel drehbar ist.

Die Handhabung dieser Betätigungsvorrichtung erfolgt in der Weise, daß das Gestell an den Backschragen angesetzt wird und soweit vorgeschoben wird, bis die Ansatzhaken einrasten, wobei auch zugleich die am Träger befindlichen Haken die Backbleche erfassen.

Nun können durch Drehen des Zahnritzels die Zahn- bzw. Treibstange und dadurch auch die Backbleche verschoben werden. Mit Hilfe dieser Betätigungsvorrichtung wird somit der Kraftaufwand, der zum Verschieben der Backbleche notwendig ist, herabgesetzt.
Zum erleichterten Ansetzen des Gestells an den Backschragen sind am Backschragen zentrierende Führungselemente in Form von winklig gebogenen Blechen vorgesehen.

Um zu verhindern, daß der Backschragen und die Beschickungsvorrichtung während des Verschiebens der Backbleche voneinander getrennt werden, sind diese durch eine Kupplung miteinander verbunden. Die Kupplung besteht hierbei aus einer entweder am Backschragen oder an der Beschickungsvorrichtung angeordneten hakenförmigen Klinke, welche den Backschragen erfaßt.

Die Klinke, die gewichts- oder federbelastet ist und somit in Geschlossenstellung verharrt, weist eine Anlaufschräge auf, so daß die Kupplung des Backschragens mit der Beschickungsvorrichtung durch einfaches Aneinanderfahren erfolgen kann. Die Räder der Beschickungsvorrichtung sind dabei abgebremst. Durch Niedertreten eines an der Klinke angeordneten Pedals ist die Kupplung wieder lösbar.

Nach einem weiteren Merkmal der Erfindung weist entweder der Backschragen oder die Beschickungsvorrichtung eine Zentriervorrichtung auf, die aus zwei nach außen winklig abgebogenen Führungsgliedern besteht, die jeweils seitlich am Backschragen oder an der Beschickungsvorrichtung angeordnet sind. Durch die Zentrierungsvorrichtung wird erreicht, daß der Backschragen problemlos an die Beschickungsvorrichtung angekoppelt werden kann.

In der Zeichnung ist eine beispielsweise Ausführungsform dargestellt.
Fig.1 zeigt die Beschickungsvorrichtung zusammen mit den Backschragen;

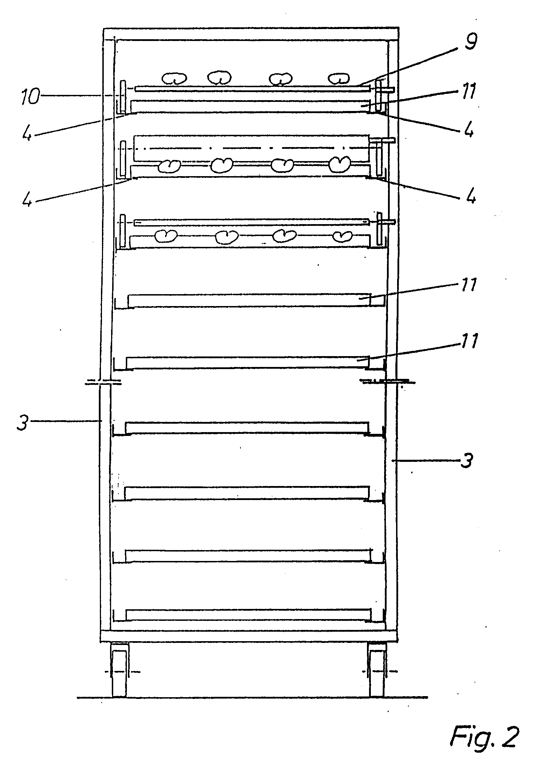

Fig.2 ist eine Seitenansicht auf die Beschickungsvorrichtung in Richtung des Pfeiles II;

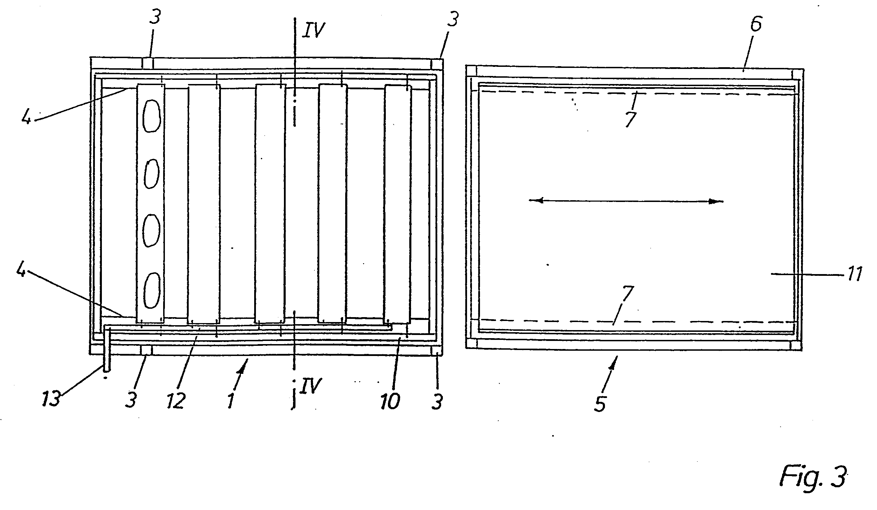

Fig.3 zeigt eine Aufsicht auf den Gegenstand gemäß Fig.1;
Fig.4 ist ein Schnitt gemäß der Linie IV-IV in einer Etage der Beschickungsvorrichtung;
Fig.5 zeigt die durch eine Stange verbundenen Kipptrögel in Normal- und in Kippstellung;
Fig.7 zeigt die Verstellvorrichtung zum gemeinsamen Verstellen der Kipptrögel;

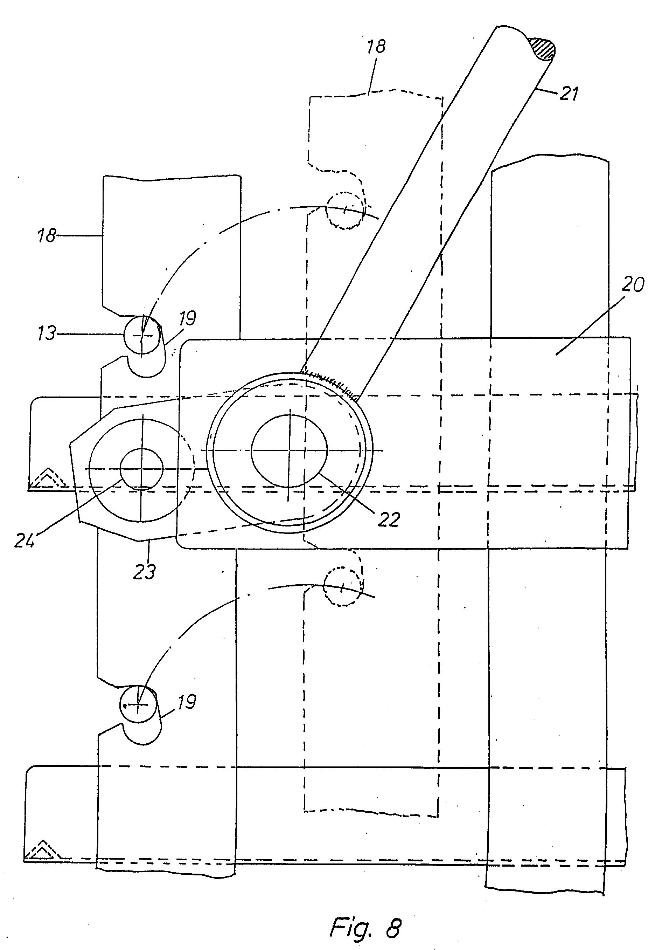

Fig.8 zeigt im vergrößerten Maßstab Einzelheiten der Verstellvorrichtung;
Fig.9 zeigt eine Ausführungsform einer Betätigungsvorrichtung zum gemeinsamen Verstellen der Backbleche;

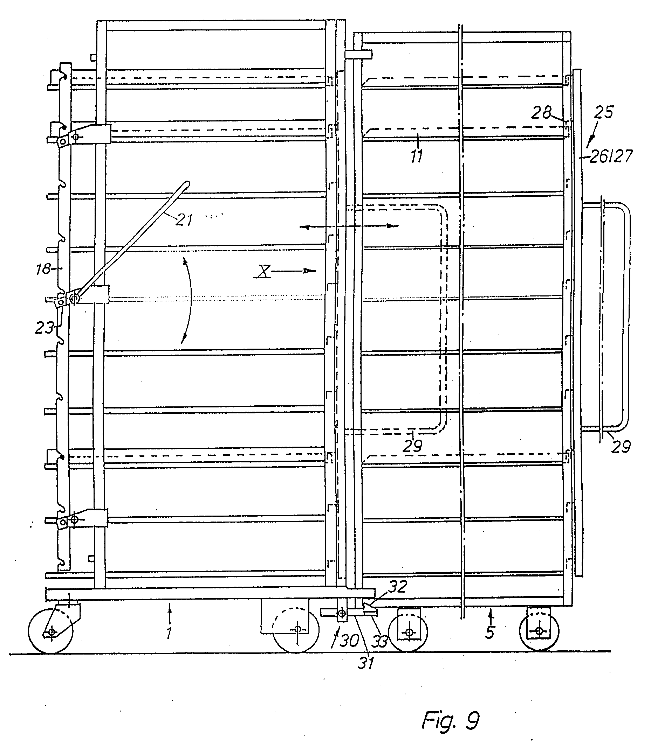

Fig.9 zeigt die eine Ausführungsform einer Betätigungsvorrichtung zum gemeinsamen Verstellen der Backbleche;

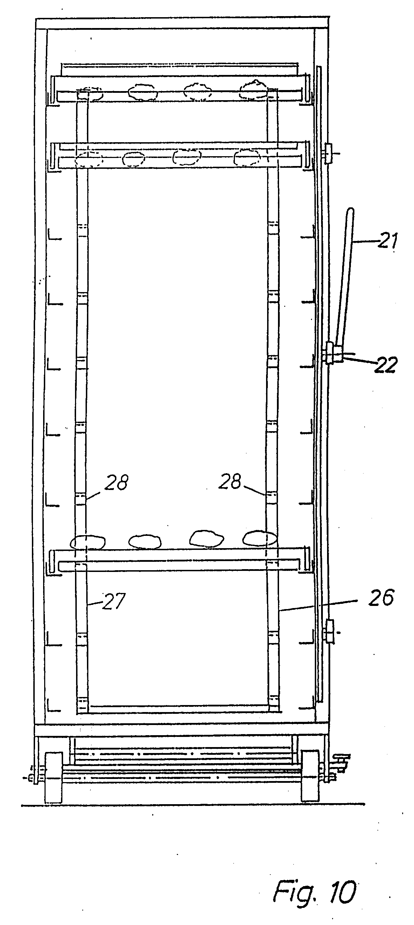

Fig.10 zeigt eine Seitenansicht auf die Vorrichtung gemäß Fig.9 in Richtung des Pfeiles X;

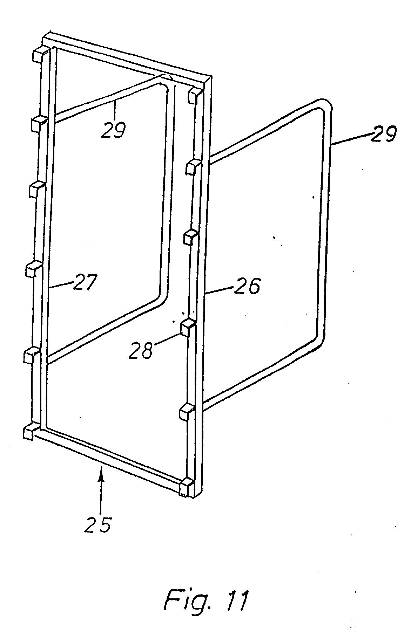

Fig.11 zeigt die Betätigungsvorrichtung in perspektivischer Darstellung.

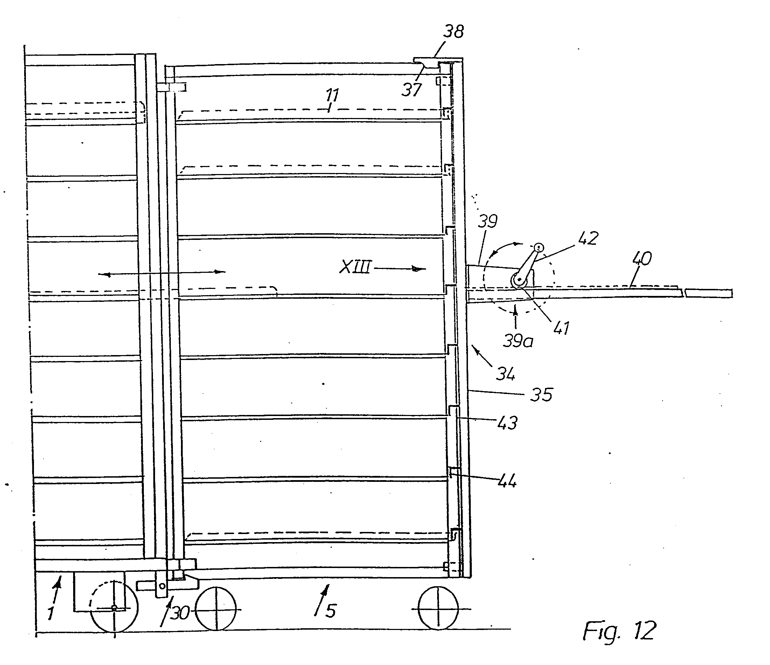

Fig. 12 zeigt die andere Ausführungsform einer Betätigungsvorrichtung zum gemeinsamen Verstellen der Backbleche;

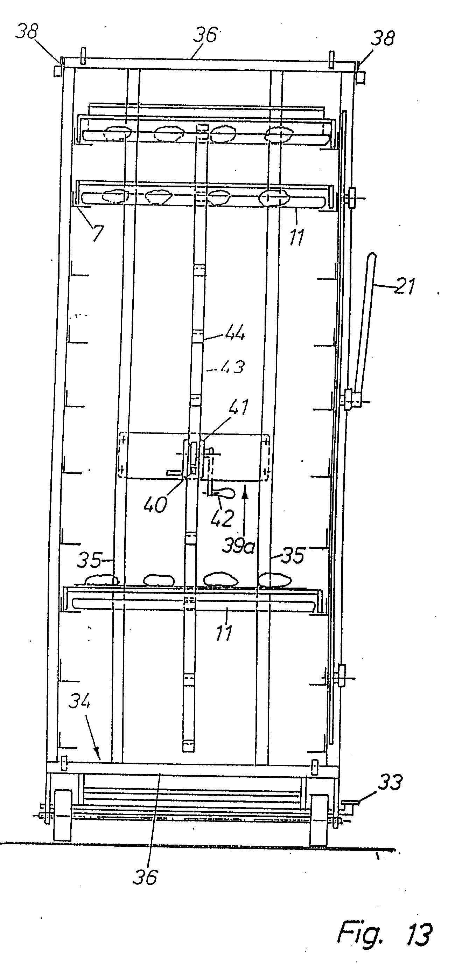

Fig. 13 zeigt eine Seitenansicht auf den Gegenstand gemäß Fig. 12 in Richtung des Pfeiles XIII;

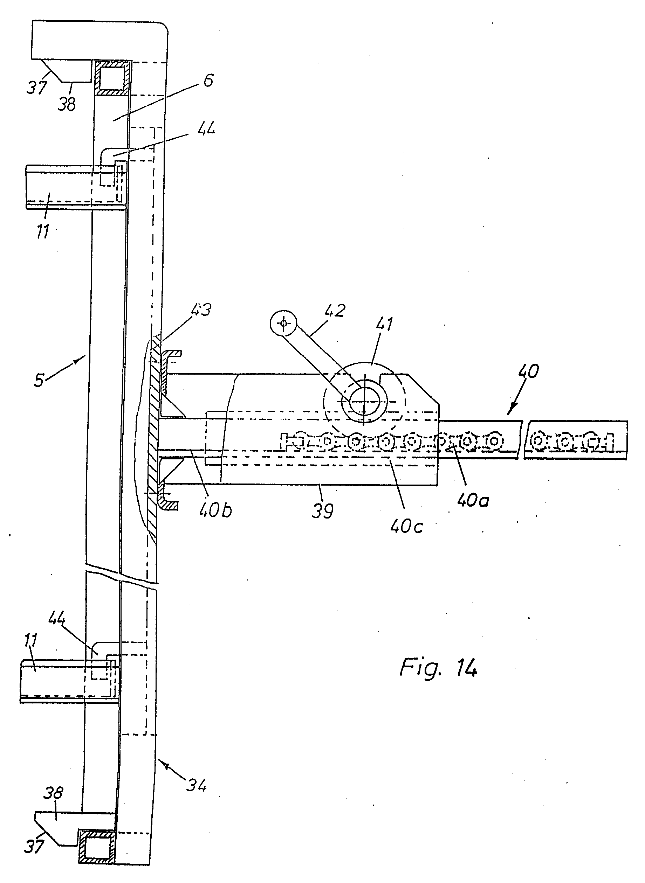

Fig. 14 zeigt die Schubvorrichtung;

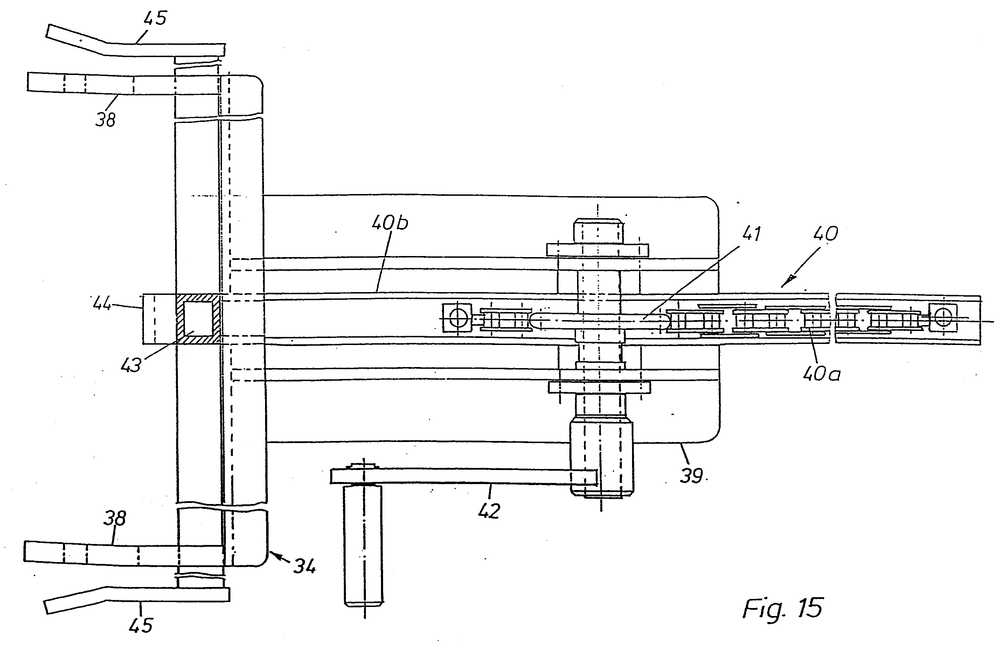

Fig. 15 zeigt eine Aufsicht auf den Gegenstand gemäß Fig. 14.

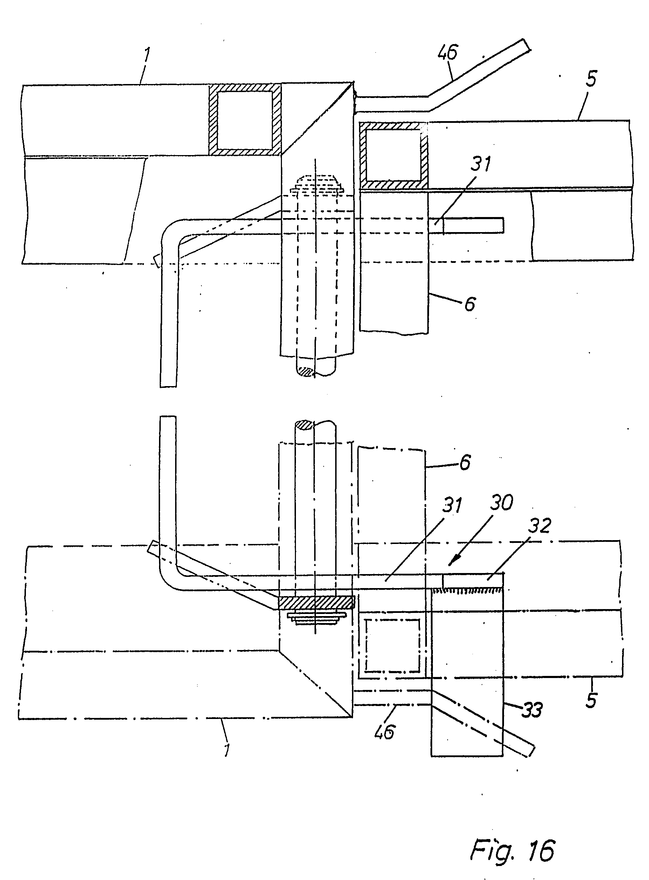

Fig. 16 zeigt in vergrößertem Maßstab die Kupplung zum Verbinden der Beschickungsvorrichtung mit dem Backschragen;

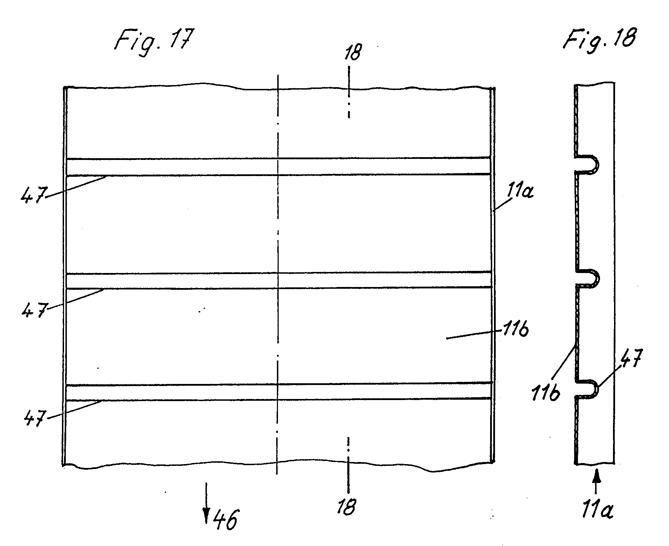

Fig. 17 zeigt ein Backblech in neuer Ausführung;
Fig. 18 zeigt einen Schnitt gemäß der Linie 18-18.

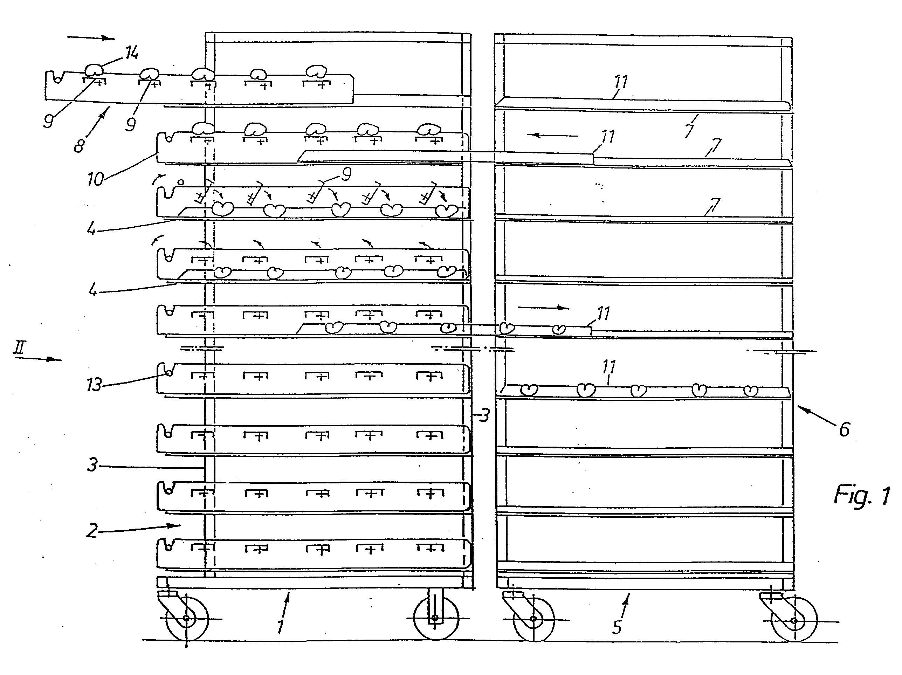

Wie Fig. 1 zeigt, besteht die insgesamz mit 1 bezeichnete Beschickungsvorrichtung aus einem Gestell 2 mit vier vertikalen Gestellstützen 3. Je zwei gegenüberliegende Gestellstützen halten die Auflagestützen 4, welche Winkelschienen sind.

Auch der insgesamt mit 5 bezeichnete Backschragen besteht im wesentlichen aus einem Gestell 6, in welchem mehrere Auflagen 7 vertikal untereinander angeordnet sind. Auch hier sind die Auflagen Winkelschienen. Der Abstand der Auflagestützen 4 in vertikaler Richtung untereinander und der Abstand der Auflagen 7 in vertikaler Richtung untereinander ist gleich, so daß jeweils die horizontalen Schenkel der Winkelschienen in gleicher Ebene liegen.

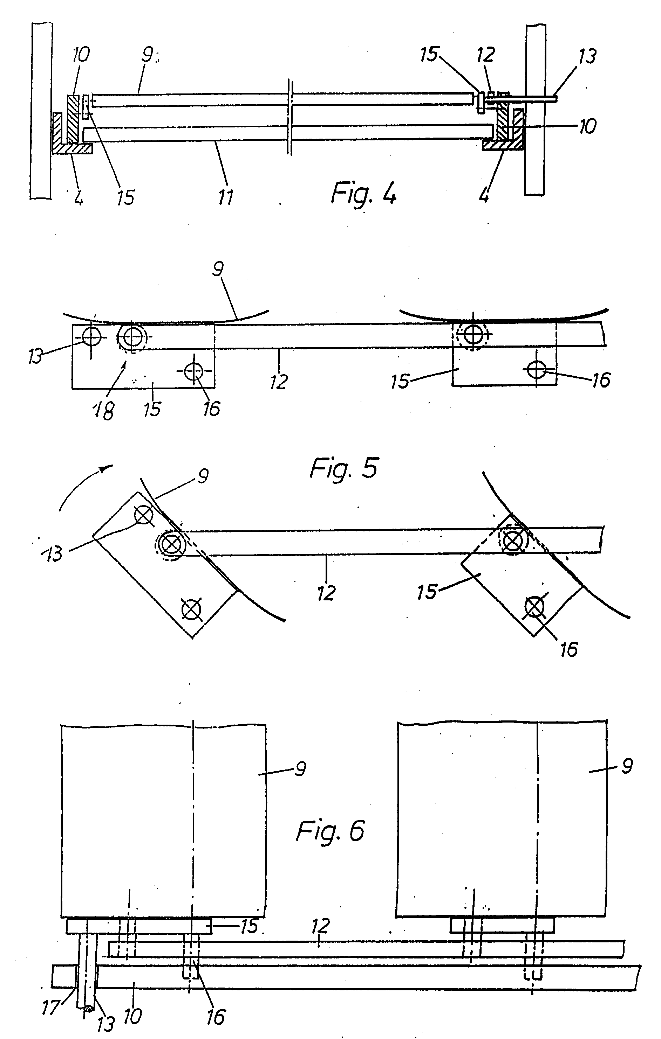

In diese Beschickungsvorrichtung wird der insgesamt mit 8 bezeichnete Kipptrögelapparat eingeschoben, der in Fig. 4-6 im einzelnen dargestellt ist. Der Kipptrögelapparat besteht dabei aus einzelnen schwenkbaren Kipptrögeln 9, die zwischen den Längsholmen 10 gelagert sind.

Im Backschragen 5 lagern auf den Auflagen 7 die Backbleche 11, die unter diesen Kipptrögelapparat geschoben werden, wo sie dann auf den Auflagestützen 4 lagern.

Fig. 6 zeigt im einzelnen die Kupplung zum Verbinden des Backschragens mit der Beschickungsvorrichtung.

Die Kipptrögel 9 lagern mittels einer Lagerplatte 15 und mit Hilfe von Lagerzapfen 16 in den Längsholmen 10.

Die Kipptrögel sind untereinander durch eine Stange 12 verbunden, wobei seitlich vom Kipptrögelapparat ein Betätigungszapfen 13 herausragt, der an der Lagerplatte 15 angebracht ist. An der Lagerplatte 15 ist die Stange 12 bei 18 angelenkt, so daß beim Verschwenken der Lagerplatte sämtliche Kipptrögel 9 mit verschwenkt werden.

In der Normalstellung der Kipptrögel liegt der Betätigungszapfen 13 in einer Ausnehmung 17 im Längsholmen 10. (Fig. 6).

Wie die Fig. 1 zeigt, wird der mit den Brötchen 14 in Kopflage beladene Kipptrögelapparat in die Beschickungsvorrichtung eingeschoben. Wie die Fig. 1 weiter zeigt, wird dann unter die Kipptrögel das Backblech 11 eingeschoben, worauf alsdann das Kippen der Kipptrögel 9 erfolgt, so daß die Brötchen auf das Backblech fallen und dort die normale Backlage einnehmen. Dann wird das Backblech auf die Auflagen 7 des Backschragens verschoben.

Ist auf diese Weise der Backschragen in jeder Ebene mit solchen Backblechen gefullt, wird der Backschragen in den Ofen geschoben.

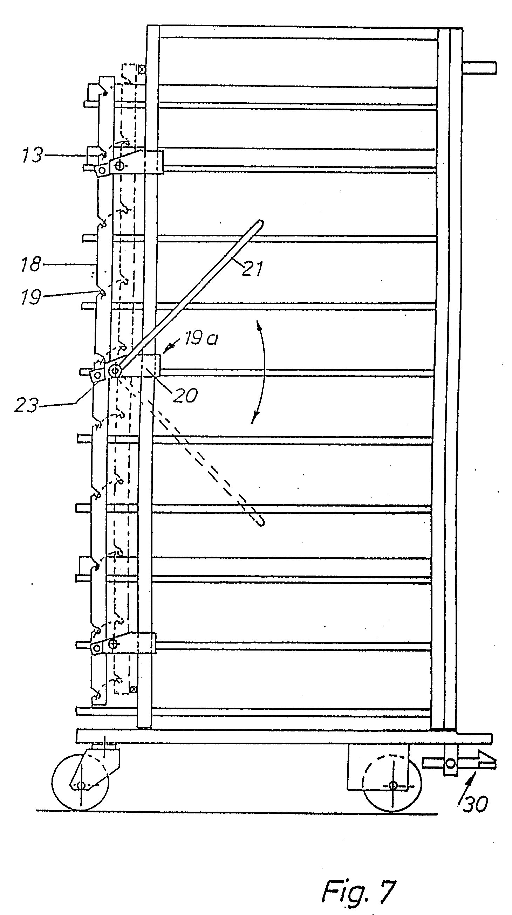

In Fig. 7 ist die Verstellvorrichtung dargestellt, durch die die Kipptrögel der übereinander in der Beschickungsvorrichtung lagernden Kipptrögelapparate gemeinsam betätigt werden. Im einzelnen besteht dabei die Verstellvorrichtung aus einer die Betätigungszapfen 13 der Kipptrögelapparate verbindenden Kuppelstange 18, welche die Schlitze 19 besitzt, in die die Betätigungszapfen 13 einlagern.

An der Beschickungsvorrichtung 1 ist ein Lagerbock 20 befestigt, welcher eine durch einen Bedienungshebel 21 drehbare Achse 22 aufnimmt, an der fest der Lenkhebel 23 angebracht ist, welcher über die Achse 24 mit der Kuppelstange verbunden ist. Dabei entspricht der Abstand zwischen der Achse 22 und 24 dem Abstand, den der Betätigungszapfen 13 von der Lagerachse 16 der Kipptrögelapparate hat. Dadurch ist ein synchronisches Verschwenken der Kipptrögel 9 der einzelnen Kipptrögelapparate 8 möglich, indem lediglich der Bedienungshebel 21 verstellt wird. Die strichpunktierte Lage der Kuppelstange 18 stellt die verstellte Lage nach dem Verstellen des Bedienungshebels 21 dar.

Daraus wird deutlich, daß lediglich durch einen einzigen Handgriff sämtliche auf den Kipptrögeln der Beschickungsvorrichtung befindlichen Brötchen auf das Backblech befördert werden können.

In Fig. 9 ist die Beschickungsvorrichtung zusammen mit dem Backschragen dargestellt, wobei an dem Backschragen die Betätigungsvorrichtung zum gemeinsamen Verstellen der Backbleche 11 angesetzt ist. Diese Betätigungsvorrichtung trägt insgesamt das Bezugszeichen 25 und besteht im wesentlichen aus einem viereckigen Rahmen mit den Vertikalstreben 26 und 27, an dem die Haken 28 angeordnet sind, die die Mittel zum Erfassen der einzelnen Backbleche darstellen. Der Rahmen 25 besitzt dabei zwei Haltegriffe 29, mit Hilfe derer die Betätigungsvorrichtung an die Backbleche des Backschragens angesetzt wird. Ist auf diese Weise die Betätigungsvorrichtung an die Backbleche angesetzt, dann kann lediglich durch Verschieben der Betätigungsvorrichtung ein gemeinsames Herübergleiten der Backbleche auf die Auflagestützen 4 der Beschickungsvorrichtung 1 erfolgen.

Sind auf diese Weise die Backbleche mit den Brötchen beladen, dann erfolgt ein Zurückziehen der Backbleche mit Hilfe dieser Betätigungsvorrichtung in entsprechender Weise, so daß die beladenen Backbleche dann im Backschragen liegen. Daraufhin kann die Betätigungsvorrichtung abgenommen werden und der Backschragen in den Ofen geschoben werden.

Damit eine feste Verbindung zwischen der Beschickungsvorrichtung 1 und dem Backschragen 5 geschaffen ist, besitzt die Beschickungsvorrichtung noch eine trennbare Kupplung, die insgesamt mit 30 bezeichnet ist.

Im einzelnen besteht diese Kupplung aus einer schwenkbaren, z.B. federbelasteten Klinke 31, welche die Anlaufschräge 32 aufweist. Damit wird deutlich, daß wenn der Backschragen angeschoben wird, die Klinke den Backschragen 5 an seinem Gestell 6 erfaßt und damit an der Beschickungsvorrichtung 1 festhält. Zum Lösen der Kupplung ist an der Klinke ein Pedal 33 vorgesehen. Dadurch kann durch Heruntertreten der Klinke ein Lösen der Kupplung erfolgen.

In Fig. 12 und 13 ist eine andere Ausführungsform einer Betätigungsvorrichtung zum gemeinsamen Verstellen der Backbleche dargestellt. Diese Betätigungsvorrichtung ist insgesamt mit 34 bezeichnet. Sie besteht aus einem an den Backschragen ansetzbaren Gestell 34 mit den vertikalen Gestellschienen 35 und den horizontalen Gestellschienen 36, die über die Gestellschienen 35 hinausragen. An den Horizontalschienen 36 sind oben und unten mit einer Keilführung 37 versehene Ansatzhaken 38 vorgesehen, die den Backschragen 5 erfassen (Fig. 14). Am Gestell 34 ist etwa in der halben Höhe eine Schubvorrichtung 39a angebracht, bestehend aus einem Lagerbock 39, welcher den Treibstangenantrieb aufnimmt, der aus der Treibstange 40 und dem Zahnritzel 41 gebildet wird, das durch die Kurbel 42 verdreht wird (vergl. auch Fig. 14).

Die Treibstange 40, die beispielsweise nach Art einer Rollenkette 40a ausgebildet ist, die in einer U-Schiene 40b befestigt ist, hält an einem Ende den Träger 43, welcher die Haken 44 aufweist. Die U-Schiene 40b liegt auf einer Lagerschiene 40c im Lagerbock 39 auf.

In der Fig. 14 ist der Treibstangenantrieb im einzelnen dargestellt. Man erkennt, daß bei Verdrehung der Kurbel 42 die Treibstange 40 den Träger 43 verschiebt.

Die Handhabung dieser Betätigungsvorrichtung geschieht in der Weise, daß das Gestell 34 an den Backschragen 5 angesetzt wird. Beim Ansetzen gelangt die Keilfläche 37 an eine Gestellstütze des Backschragens und wird dabei etwas angehoben, so daß beim nachfolgenden Absenken die Haken 44 die Backbleche 11 erfassen können. Nun kann durch Verdrehen der Kurbel 42 das Verschieben der Backbleche in die Beschickungsvorrichtung 1 vonstattengehen. Sind die Backbleche beladen, dann erfolgt ebenfalls durch Verdrehen der Kurbel 42 eine Rückführung der Backbleche in den Backschragen 5.

Damit beim Ansetzen des Gestells 34 an den Backschragen 5 eine zentrische Führung ermöglicht wird, sind an dem Gestell 34 winklig gebogene Führungselemente 45 vorgesehen.

Fig. 16 zeigt im vergrößerten Maßstab die Kupplung 30 zur Verbindung der Beschickungsvorrichtung und des Backschragens 5. Dabei besitzt die Beschickungsvorrichtung 1 eine Zentriervorrichtung in Form von winklig gebogenen Führungsgliedern 46, damit der Backschragen zentrisch an die Beschickungsvorrichtung angeschoben werden kann.

Die Betätigungsvorrichtungen gemäß Fig. 9 und Fig. 12 können auch ortsfest am Backschragen angebracht sein.

Fig. 17 zeigt das Backblech von oben und ist mit 11a bezeichnet. Quer zur Längsrichtung (Pfeil 46) sind mehrere Sicken 47 angebracht, die über dem Boden 11b vorstehen, so daß die Unterseite keine vorstehende Teile aufweist. Anstelle solcher paralleler Sicken können auch kreuzweise liegende Sicken vorgesehen sein.

## Patentansprüche

1. Backschragen (5) mit Backblechen, welcher mit einer Beschickungsvorrichtung (1) zusammenarbeitet, die die Kipptrögelapparate (8) zum Abkippen der Backware auf die Backbleche aufnimmt, wobei im Backschragen mehrere übereinander angeordnete Auflagen (7) für die Backbleche vorgesehen sind,
**dadurch gekennzeichnet,** daß an der Vorderkante der Backbleche (11) ein alle Backbleche (11) erfassender Rahmen (25, 34) vorgesehen ist, durch den die Backbleche gemeinsam von Hand oder maschinell verschoben werden können.

2. Backschragen nach Anspruch 1,
**dadurch gekennzeichnet,** daß der Rahmen paarweise angeordnete Haken (28, 44) besitzt.

3. Backschragen nach Anspruch 1,
**dadurch gekennzeichnet,** daß der Rahmen ein ansetzbares Gestell (34) ist, das einen die Backbleche erfassenden mittels einer Schubvorrichtung (39a) verschiebbaren Träger (43) mit Haken (44) aufweist.

4. Backschragen nach Anspruch 3,
**dadurch gekennzeichnet,** daß das Gestell (34) seitliche mit Keilführung (37) versehene Ansatzhaken (38) zum Ansetzen an den Backschragen (5) aufweist.

5. Backschragen nach Anspruch 3
**dadurch gekennzeichnet**, daß die Schubvorrichtung (39a) als Zahn- oder Treibstangenantrieb ausgebildet ist, dessen Zahnritzel (41) ortsfest gelagert und mittels einer Kurbel (42) drehbar ist.

## Claims

1. Bakery trestle (5) with baking trays, which co-operate with a loading device (1) which receives the tipping chute apparatus (8) for the tipping of bakery wares onto the baking trays, wherein several supports (7), which are arranged one above the other, for the baking trays are provided in the bakery trestle, characterised thereby that provided at the front edge of the baking tray (11) is a frame (25, 34), which grips all baking trays (11) and by which the baking trays can be manually or mechanically displaced in common.

2. Bakery trestle according to claim 1, characterised thereby that the frames include hooks (28, 44) arranged in pairs.

3. Bakery trestle according to claim 1, characterised thereby that the frame is an attachable structure (34), which comprises a carrier (43), which grips the baking trays and is displaceable by means of a thrust device (39a), with hooks (44).

4. Bakery trestle according to claim 3, characterised thereby that the structure (3) has projecting hooks (38), which are laterally provided with ramp guides (37), for attaching to the bakery trestle (5).

5. Bakery trestle according to claim 3, characterised thereby that the thrust device (39a) is constructed as a toothed or drive-rod drive, the pinion (41) of which is mounted at a fixed location and rotatable by means of a crank (42).

## Revendications

1. Chariot de boulangerie (5) équipé de plaques de cuisson en tôle et coopérant avec un dispositif de chargement (1) qui porte les appareils à supports basculants (8) destinés à déverser des articles à cuire sur les plaques de cuisson, le chariot comportant plusieurs appuis superposés (7) pour recevoir les plaques de cuisson, **caractérisé** en ce qu'un cadre (25, 34) agencé pour saisir toutes les plaques de cuisson (11) est prévu au bord avant desdites plaques (11), lesquelles peuvent être déplacées ensemble manuellement ou mécaniquement au moyen de ce cadre.

2. Chariot selon la revendication 1, **caractérisé** en ce que le cadre possède des crochets (28, 44) disposés par paires.

3. Chariot selon la revendication 1, **caractérisé** en ce que le cadre est un châssis auxiliaire (34) comportant un support (43) à crochets (44) qui saisit les plaques de cuisson et qui peut être déplacé au moyen d'un mécanisme de coulissement (39a).

4. Chariot selon la revendication 3, **caractérisé** en ce que le châssis auxiliaire (34) comporte des crochets latéraux de montage (38) pourvu de biseaux de guidage (37) pour s'adapter au chariot (5).

5. Chariot selon la revendication 3, **caractérisé** en ce que le mécanisme de coulissement (39a) est formé par un entraînement à crémaillère ou à bielles dont un pignon (41) occupe une position stationnaire et est entraîné en rotation au moyen d'une manivelle (42).
